# EUROPEAN PATENT APPLICATION

(11) **EP 4 797 412 A1**
(43) Date of publication of application: **26.08.2026**
(21) Application number: 26151067.1
(22) Date of filing: 09.01.2026
(51) Int. Cl.: H01M 50/30, H01M 50/342, H01M 50/383

(54) **SECONDARY BATTERY AND METHOD OF MANUFACTURING THE SAME**

(30) Priority: 24.02.2025 KR 20250023784
(71) Applicant: Samsung SDI Co., Ltd., Yongin-si, Gyeonggi-do 17084 (KR)
(72) Inventor: HWANG, San, Yongin-si, 17084 (KR)
(74) Representative: Marks & Clerk LLP

(57) **Abstract**

A secondary battery includes a battery can that accommodates an electrode assembly, a cap assembly connected to the battery can, a vent portion in the cap assembly, the vent portion being configured to open when an internal pressure of the battery can reaches a predetermined threshold, and a diffusion prevention unit on the vent portion, the diffusion prevention unit being expandable in response to pressure of a gas when the gas and flames are released through the vent portion, and the diffusion prevention unit being configured to block the gas and flames from spreading to an outside.

## Description

### BACKGROUND

### 1. Field

The present disclosure relates to a secondary battery, and more specifically, to a secondary battery having a structure that allows flames or heat emission to be suppressed in the event of a fire and thermal runaway to surrounding battery cells to be prevented, and a method of manufacturing the same.

### 2. Description of the Related Art

Batteries include primary batteries that are not rechargeable and secondary batteries that can be (re)charged and discharged. Large-capacity secondary batteries may be used as batteries for power sources for driving motors and power storage units in hybrid vehicles, electric vehicles, etc.

Secondary batteries may cause safety issues (e.g., fires or explosions) when the heat generated therein is not effectively controlled. Accordingly, a vent portion is applied to the secondary battery. The vent portion may be opened to discharge gas when the pressure inside the secondary battery becomes abnormally high, thereby preventing an explosion due to the increased pressure.

The above information disclosed in this Background section is for enhancement of understanding of the background of the present disclosure, and therefore, it may contain information that does not constitute a related (or prior) art.

### SUMMARY

According to an aspect of the present disclosure, there is provided a secondary battery including a battery can that accommodates an electrode assembly, a cap assembly connected to the battery can, a vent portion (in the cap assembly) opened (or configured to open) when an internal pressure of the battery can rises (or reaches a predetermined threshold), and a diffusion prevention unit (on the vent portion) that expands due to a pressure of a gas when the gas and flames are released through the vent portion (or being expandable in response to pressure of a gas when the gas and flames are released through the vent portion) and blocks the gas and flames to prevent the gas and flames from spreading to the outside (or being configured to block the gas and flames from spreading to an outside).

According to embodiments, the diffusion prevention unit may include a flame retardant expansion sheet with elasticity and flame retardancy, and a sheet fixer fixing the flame retardant expansion sheet to the cap assembly.

According to embodiments, the cap assembly may include a cap plate with electrode terminals, and a vent hole through the cap plate, a safety vent covering the vent hole and being configured to rupture when the internal pressure reaches the predetermined threshold.

According to embodiments, the flame retardant expansion sheet may be fixed to the cap plate by the sheet fixer, and a fire extinguishing material may fill a space between the safety vent and the flame retardant expansion sheet.

According to embodiments, the fire extinguishing material may include a powder fire extinguishing agent.

According to embodiments, the flame retardant expansion sheet may be in contact with an upper surface of the cap plate, and the sheet fixer may include fastening parts fixing a peripheral portion of the flame retardant expansion sheet to the cap plate.

According to embodiments, the flame retardant expansion sheet may be in contact with an upper surface of the cap plate, and the sheet fixer may include a heat resistant adhesive fixing a peripheral portion of the flame retardant expansion sheet to the cap plate.

According to embodiments, the secondary battery may further include a sheet support frame on the cap plate, the sheet support frame being configured to maintain the flame retardant expansion sheet in an unfolded state, and the sheet fixer including fastening parts fixing the sheet support frame to the cap plate.

According to embodiments, the secondary battery may further include a fire extinguishing sheet covering the vent hole, the fire extinguishing sheet being between the cap plate and the flame retardant expansion sheet and being configured to perform a flame extinguishing action.

According to embodiments, the secondary battery may further include a fire extinguishing sheet installation groove in the cap plate, the fire extinguishing sheet installation groove accommodating the fire extinguishing sheet.

According to embodiments, the sheet fixer may include a pressing frame covering a peripheral portion of the flame retardant expansion sheet, and a fastening part fixing the pressing frame to the cap plate.

According to another aspect of the present disclosure, there is provided a method of manufacturing a secondary battery, including forming a battery can that accommodates an electrode assembly, forming a vent portion in a cap assembly, the vent portion including a vent hole configured to open when an internal pressure of the battery can reaches a predetermined threshold, forming a diffusion prevention unit on the vent portion, the diffusion prevention unit including a flame retardant expansion sheet covering the vent hole and being expandable in response to pressure of a gas, and assembling the battery can and the cap assembly.

According to embodiments, the method may further include fixing a safety vent in the vent hole, and injecting an extinguishing material between the flame retardant expansion sheet and the safety vent.

According to embodiments, the cap assembly may be formed to include a cap plate, such that the vent hole is formed in the cap plate, and the flame retardant expansion sheet may be formed to have flame retardancy and elasticity and is fixed to the cap plate, such that the flame retardant expansion sheet is in contact with the cap plate by a sheet fixing part.

According to embodiments, the sheet fixing part may include a plurality of fastening parts that fix an outer portion of the flame retardant expansion sheet to the cap plate.

According to embodiments, the sheet fixing part may include a heat resistant adhesive that adheres and fixes an outer portion of the flame retardant expansion sheet to the cap plate.

According to embodiments, the method may further include fixing a safety vent in the vent hole, and mounting a fire extinguishing sheet between the flame retardant expansion sheet and the safety vent, such that the fire extinguishing sheet performs a fire extinguishing function on flames.

According to embodiments, the cap assembly may be formed to include a cap plate, such that the vent hole is formed in the cap plate, and the flame retardant expansion sheet is formed to have flame retardancy and elasticity and is fixed to the cap plate, such that the flame retardant expansion sheet is in contact with the cap plate by a sheet fixing part.

According to embodiments, the sheet fixing part may include a plurality of fastening parts that fix an outer portion of the flame retardant expansion sheet to the cap plate.

According to embodiments, the sheet fixing part may further include a pressing frame that covers an outer portion of the flame retardant expansion sheet and fixes to the cap plate by the fastening part.

At least some of the above and other features of the invention are set out in the claims.

### BRIEF DESCRIPTION OF THE DRAWINGS

Features will become apparent to those of skill in the art by describing in detail example embodiments with reference to the attached drawings, in which:
FIG. 1 is a perspective view illustrating a secondary battery according to an embodiment of the present disclosure;
FIG. 2 is a partially enlarged view of a diffusion prevention unit in FIG. 1;
FIG. 3 is a cross-sectional view of the secondary battery in FIG. 1;
FIG. 4 is an enlarged view illustrating portion A in FIG. 3;
FIGS. 5 and 6 are diagrams for describing the operation of the diffusion prevention unit shown in FIG. 3;
FIG. 7 is a perspective view illustrating a modified example of the secondary battery according to an embodiment of the present disclosure;
FIG. 8 is a partially enlarged view of a diffusion prevention unit in FIG. 7;
FIGS. 9 and 10 are cross-sectional views for describing the configuration and operation of the diffusion prevention unit in FIG. 7;
FIG. 11 is an exploded perspective view illustrating another example of a secondary battery according to an embodiment of the present disclosure;
FIGS. 12 and 13 are diagrams for describing the configuration and operation method of the diffusion prevention unit in FIG. 11;
FIG. 14 is an exploded perspective view illustrating still another example of a secondary battery according to an embodiment of the present disclosure;
FIGS. 15 and 16 are diagrams for describing the configuration and operation method of the diffusion prevention unit in FIG. 14;
FIG. 17 is a perspective view illustrating a battery pack with a secondary battery according to an embodiment of the present disclosure;
FIG. 18 is a diagram illustrating a vehicle with the battery pack of FIG. 17;
FIG. 19 is a flowchart illustrating a method of manufacturing a secondary battery according to an embodiment of the present disclosure; and
FIG. 20 is a flowchart illustrating another example of a method of manufacturing a secondary battery according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe embodiments in the best way. The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. In addition, it will be understood that if a component is referred to as being "linked," "coupled," or "connected" to another component, the elements may be directly "coupled," "linked" or "connected" to each other, or another component may be "interposed" between the components. Like reference numerals refer to like elements throughout.

References to two compared elements, features, etc. as being "the same" may mean that they are "substantially the same." Thus, the phrase "substantially the same" may include a case having a deviation that is considered low in the art, e.g., a deviation of 5% or less. In addition, uniformity of a parameter in a predetermined region may imply uniformity from an average perspective.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list.

Throughout the specification, if "A and/or B" is stated, it means A, B or A and B, unless otherwise stated and if "C to D" is stated, it means C or more and D or less, unless otherwise stated.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below.

The terminology used herein is for the purpose of describing embodiments of the present disclosure and is not intended to limit the present disclosure.

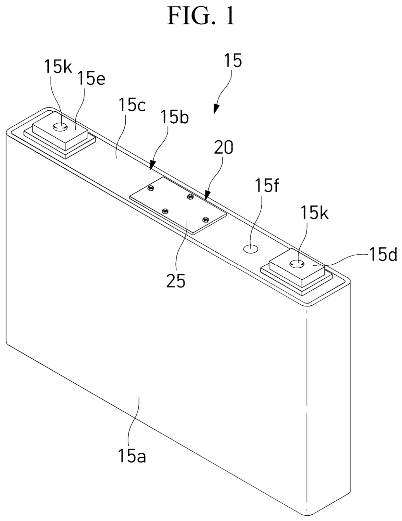

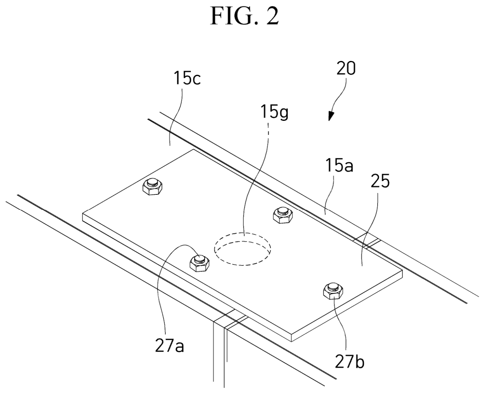

FIG. 1 is a perspective view illustrating a secondary battery 15 according to an embodiment of the present disclosure, and FIG. 2 is a partially enlarged view illustrating a diffusion prevention unit 20 shown in FIG. 1.

As shown in the drawings, the secondary battery 15 according to the present embodiment may include a battery can 15a, a cap assembly 15b, a vent portion, and a diffusion prevention unit 20 (e.g., diffusion preventer).

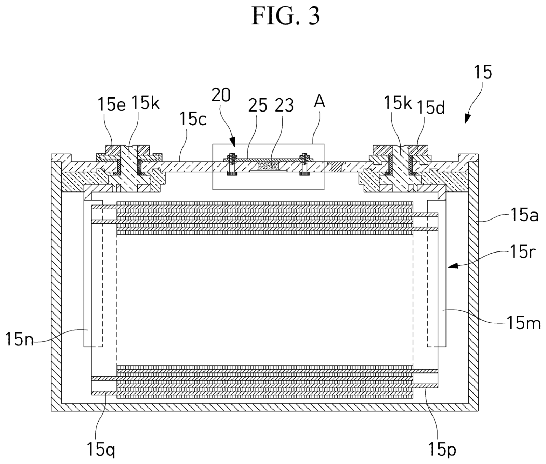

Referring to FIGS. 1-2, a battery can 15a may form the overall exterior of a prismatic secondary battery and may be formed of a conductive metal, e.g., aluminum, an aluminum alloy, or a nickel-plated steel. In addition, the battery can 15a may provide a space in which an electrode assembly is accommodated. An electrode assembly 15r (FIG. 3) may be accommodated in (e.g., built into) the battery can 15a. The electrode assembly 15r may be electrically connected to a positive electrode terminal 15d and a negative electrode terminal 15e, which are described below.

In addition, a cap assembly 15b may include a cap plate 15c covering an opening of the battery can 15a. In some embodiments, the battery can 15a and the cap plate 15c may be formed of a conductive material. The positive electrode terminal 15d and the negative electrode terminal 15e may be installed in the cap assembly 15b. The positive electrode terminal 15d and the negative electrode terminal 15e may be electrically connected to an internal positive electrode tab (i.e., a first electrode tab 15p) and an internal negative electrode tab (i.e., a second electrode tab 15q), respectively, and installed to be exposed to the outside of the cap plate 15c.

In addition, an electrolyte inlet 15f may be formed in the cap plate 15c. An electrolyte may be injected through the electrolyte inlet 15f.

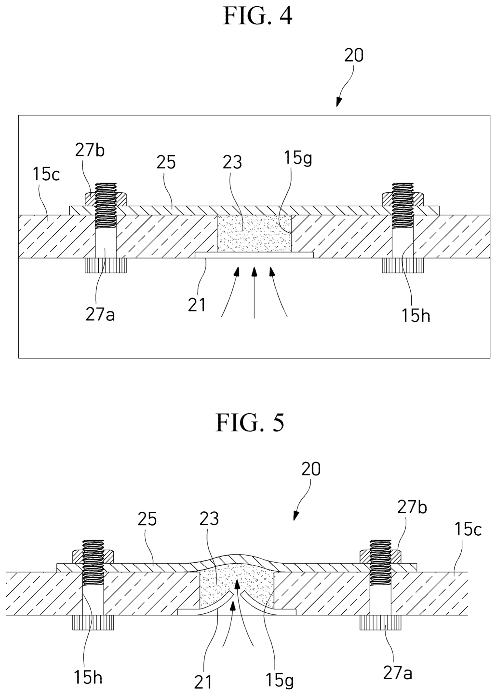

The vent portion may include a vent hole 15g. The vent hole 15g is blocked by a safety vent 21 (FIG. 4), which is described below. The safety vent 21 may rupture when an internal pressure of the battery can 15a exceeds an allowable limit. When the safety vent 21 ruptures, the vent hole 15g is opened. In addition, when the vent hole 15g is opened, an inner gas and flames may be released to the outside.

The diffusion prevention unit 20 may expand (e.g., may be expandable) upon receiving the released gas and flames (e.g., in response to pressure), prevent the gas and flames from spreading to other secondary batteries in the vicinity, and furthermore, prevent thermal runaway. In other words, the diffusion prevention unit 20 may expand upon receiving the pressure of gas when the gas and flames are released through the vent portion, i.e., the vent hole 15g, thereby blocking the gas and flames and preventing the gas and flames from spreading to the outside.

An enlarged view of the diffusion prevention unit 20 is shown in FIG. 2. As shown in FIG. 2, the diffusion prevention unit 20 may include a flame retardant expansion sheet 25 and a sheet fixing part (e.g., sheet fixer). The flame retardant expansion sheet 25 may be a quadrangular sheet-shaped member with elasticity and flame retardancy. The sheet fixing part may be implemented in various ways, e.g., fastening parts including a bolt 27a and a nut 27b may be applied. A description thereof will be given below.

FIG. 3 is a cross-sectional view illustrating the secondary battery 15 shown in FIG. 1.

Referring to FIG. 3, the electrode assembly 15r may be installed inside the battery can 15a. The electrode assembly 15r inside the battery can 11 may be formed by winding or stacking first electrode plates, separators, and second electrode plates formed in a plate shape or a film shape. If the electrode assembly 15r is a wound stack, a winding axis may be parallel to the longitudinal direction of the battery can 15a. In some other embodiments, the electrode assembly 15r may be a stack type rather than a winding type. The shape of the electrode assembly 15r may vary.

In addition, the electrode assembly 15r may be a Z-stack electrode assembly in which a positive electrode plate and a negative electrode plate are inserted into both sides of a separator, which is then bent into a Z-stack. In addition, one or more electrode assemblies 15r may be stacked such that long sides of the electrode assemblies are adjacent to each other and accommodated in the battery can, and the number of electrode assemblies in the battery can may vary. The first electrode plate of the electrode assembly 15r may act as a negative electrode, and the second electrode plate may act as a positive electrode, e.g., the reverse is also possible.

The first electrode plate may be formed by applying a first electrode active material, e.g., graphite, carbon, or the like, to a first electrode current collector formed of a metal foil, e.g., copper, a copper alloy, nickel, a nickel alloy, or the like. The first electrode plate may include the first electrode tab 15p (e.g., a first uncoated portion) that is a region to which the first electrode active material is not applied. The first electrode tab 15p may act as a current flow path between the first electrode plate and the first current collector 15m. In some embodiments, when the first electrode plate is manufactured, the first electrode tab 15p is formed by being cut in advance to protrude to one side of the electrode assembly, or the first electrode tab protrudes to one side of the electrode assembly more than (e.g., farther than or beyond) the separator without being separately cut.

The second electrode plate may be formed by applying a second electrode active material, e.g., a transition metal oxide, on a second electrode current collector formed of a metal foil, e.g., aluminum or an aluminum alloy. The second electrode plate may include the second electrode tab 15q (e.g., a second uncoated portion) that is a region to which the second electrode active material is not applied. The second electrode tab 15q may act as a current flow path between the second electrode plate and the second current collector 15n. In some embodiments, the second electrode tab 15q may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

For example, referring to FIG. 3, the first electrode tab 15p and the second electrode tab 15q may be positioned on opposite sides (e.g., on the right side and the left side) of the electrode assembly 15r, respectively. In another example, the first electrode tab 15p and the second electrode tab 15q may both be positioned on a same side (e.g., both on the right side or both on the left side) of the electrode assembly 15r.

Referring to FIG. 3, a left surface of the electrode assembly 15r is a vertical surface of the electrode assembly 15r, to which the second current collector 15n is bonded, and a right surface thereof (that is an opposite surface to the left surface) is a surface to which the first current collector 15m is bonded. Therefore, the terms "left surface" and "right surface" of the electrode assembly 15r may be switched when the battery is rotated horizontally or vertically.

The separator prevents or substantially reduces instances of a short circuit between the first electrode plate and the second electrode plate while allowing movement of lithium ions therebetween. The separator may be made of, e.g., a polyethylene film, a polypropylene film, a polyethylene-polypropylene film, or the like.

In some embodiments, the electrode assembly 15r is accommodated in the battery can 11 along with an electrolyte.

In the electrode assembly 15r, the first current collector 15m and the second current collector 15n may be welded and connected to the first electrode tab 15p extending from the first electrode plate and the second electrode tab 15q extending from the second electrode plate, respectively. The first current collector 15m and the second current collector 15n may be connected to the positive electrode terminal 15d and the negative electrode terminal 15e through connection members 15k, respectively. For example, the connection members 15k may each have an outer peripheral surface that is threaded, and may be fastened to the positive electrode terminal 15d and the negative electrode terminal 15e by screwing. In another example, the connection members 15k may also be coupled to the positive electrode terminal 15d and the negative electrode terminal 15e by riveting or welding.

Hereinafter, suitable materials that may be implemented for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel oxide, a lithium cobalt oxide, a lithium manganese oxide, a lithium iron phosphate compound, a cobalt-free nickel-manganese oxide, or a combination thereof.

As an example, a compound represented by any one of the following formulas may be used: LiₐA_{1-b}X_{b}O_{2-c}D'_{c} (0.90≤a≤1.8, 0≤b≤0.5, 0≤c≤0.05); LiₐMn_{2-b}X_{b}O_{4-c}D'_{c} (0.90≤a≤1.8, 0≤b≤0.5, 0≤c≤0.05); LiₐNi_{1-b-c}Co_{b}X_{c}O_{2-α}D'_{α} (0.90≤a≤1.8, 0≤b≤0.5, 0≤c≤0.5, 0<α<2); Li1ₐNi_{1-b-c}Mn_{b}X_{c}O_{2-α}D'_{α} (0.90≤a≤1.8, 0≤b≤0.5, 0≤c≤0.5, 0<α<2);

LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A may be Ni, Co, Mn, or a combination thereof; X may be Al, Ni, Co, Mn, Cr, Fe, Mg, Sr, V, a rare earth element, or a combination thereof; D' may be O, F, S, P, or a combination thereof; G may be Al, Cr, Mn, Fe, Mg, La, Ce, Sr, V, or a combination thereof; and L¹ may be Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al).

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon negative electrode active material, which may include, e.g., crystalline carbon, amorphous carbon, or a combination thereof. Examples of the crystalline carbon may include graphite, e.g., natural graphite or artificial graphite, and examples of the amorphous carbon may include soft carbon, hard carbon, a pitch carbide, a meso-phase pitch carbide, sintered coke, and the like.

A Si negative electrode active material or a Sn negative electrode active material may be used as the material capable of being doped and undoped with lithium. The Si negative electrode active material may be silicon, a silicon-carbon composite, SiOₓ (0<x≤2), a Si alloy, or a combination thereof.

The silicon-carbon composite may be a composite of silicon and amorphous carbon. According to an embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99.5 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move. The non-aqueous organic solvent may be a carbonate, an ester, an ether, a ketone, an alcohol solvent, an aprotic solvent, and may be used alone or in combination of two or more.

In addition, when a carbonate solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used. The separator may include a porous substrate and a coating layer including an organic material, an inorganic material, or a combination thereof on one or both surfaces of the porous substrate.

The organic material may include a polyvinylidene fluoride polymer or a (meth)acrylic polymer. The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof. The organic material and the inorganic material may be mixed in one coating layer or may be in the form of a coating layer including (or containing) an organic material and a coating layer including (or containing) an inorganic material that are stacked on each other.

Meanwhile, the diffusion prevention unit 20 may be installed in the cap plate 15c. FIG. 4 is an enlarged view illustrating portion A of FIG. 3, i.e., the diffusion prevention unit 20.

Referring to FIGS. 2-4, the vent hole 15g may be formed in the cap plate 15c, and the safety vent 21 may be mounted in the vent hole 15g. For example, referring to FIG. 4, the safety vent 21 may be on a lower surface of the cap plate 15c facing the electrode assembly 15r, and the safety vent 21 may overlap (e.g., completely cover) a bottom of the vent hole 15g. As described above, the safety vent 21 may rupture when an internal pressure of the battery can exceeds an allowable limit.

In addition, the flame retardant expansion sheet 25 may be installed in close contact (e.g., direct contact) with an upper surface of the cap plate 15c (e.g., the upper and lower surfaces of the cap plate 15c may be opposite to each other). The flame retardant expansion sheet 25 may be a member with flame retardancy and elasticity. The flame retardant expansion sheet 25 may include a nylon series fabric (e.g., a synthetic polymer or plastic material such as a thermoplastic polymer material including a polyamide) that has undergone flame retardant treatment. The flame retardant expansion sheet 25 may have a quadrangular plate shape and may remain fixed by the sheet fixing part while covering the vent hole 15g. For example, referring to FIG. 4, the flame retardant expansion sheet 25 and the safety vent 21 may be on opposite surfaces of the cap plate 15c, and may overlap (e.g., completely cover) opposite sides of the vent hole 15g. For example, referring to FIG. 4, the flame retardant expansion sheet 25 may have a longer length than the safety vent 21 along the longitudinal direction of the battery can 15a, and may extend beyond the safety vent 21 on opposite sides of the safety vent 21.

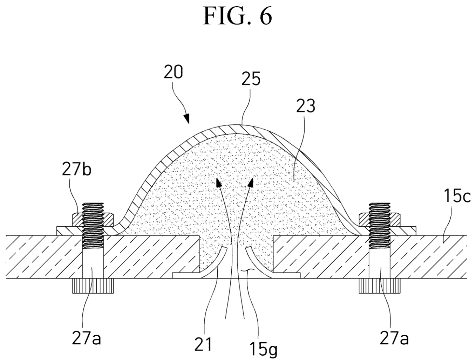

The sheet fixing part of the flame retardant expansion sheet 25 may include fastening parts for fixing and maintaining the flame retardant expansion sheet 25. The fastening parts may include the bolt 27a and the nut 27b. The bolt 27a may pass upward through the cap plate 15c and the flame retardant expansion sheet 25, and may be coupled to the nut 27b on the upper surface of the cap plate 15c, thereby fixing the flame retardant expansion sheet 25 to the cap plate 15c. That is, an outer portion (e.g., a peripheral portion) of the flame retardant expansion sheet 25 may be fixed to the cap plate 15c (e.g., only the peripheral portion of the flame retardant expansion sheet 25 may be directly fixed to the cap plate 15c). Since only the outer portion of the flame retardant expansion sheet 25 is fixed to the cap plate 15c, a central portion of the flame retardant expansion sheet 25 may remain movable and expandable, and may expand upward (e.g., stretch away from the cap plate 15c in a direction oriented away from the electrode assembly 15r), as shown in FIG. 6.

In detail, referring to FIG. 4, an interior of the vent hole 15g between the safety vent 21 and the flame retardant expansion sheet 25 may be filled with an extinguishing agent. The extinguishing agent may be a powder fire extinguishing agent 23. As shown in FIG. 6, the powder fire extinguishing agent 23 may extinguish the flames carried along the gas flow into the expanded flame retardant expansion sheet 25 when the safety vent 21 ruptures. In addition, some of the powder fire extinguishing agent 23 may flow into the battery can and extinguish the flames.

FIGS. 5 and 6 are diagrams for describing the operation of the diffusion prevention unit 20 shown in FIG. 3. FIG. 5 shows the moment when the safety vent 21 begins to rupture, and FIG. 6 schematically shows the moment when the safety vent 21 completely ruptures and the gas and flames are released outside the battery cell.

Referring to FIG. 5, it can be seen that the safety vent 21 is beginning to fracture. The fracture, i.e., the rupture, of the safety vent 21 may progress when the internal pressure of the battery can 15a exceeds the allowable pressure. As the safety vent 21 begins to fracture, the gas and flames inside the battery cell are ejected upward through a gap in the fractured safety vent 21 and begin to push the powder fire extinguishing agent 23 upward.

FIG. 6 shows that the gas being ejected upward through the vent hole 15g expands the flame retardant expansion sheet 25. For example, referring to FIG. 6, since the entire peripheral portion of the flame retardant expansion sheet 25 may be fixed to the cap plate 15c, the central portion of the flame retardant expansion sheet 25 may completely cover the vent hole 15g while expanding upward from the vent hole 15g. The gas and flames are trapped inside the expanded flame retardant expansion sheet 25 and subjected to the action of the powder fire extinguishing agent 23. That is, the flames are extinguished by the powder fire extinguishing agent 23. In this way, since the flame retardant expansion sheet 25 covers and prevents the high-temperature gas and flames from spreading to the outside, thermal runaway of the secondary battery may be prevented.

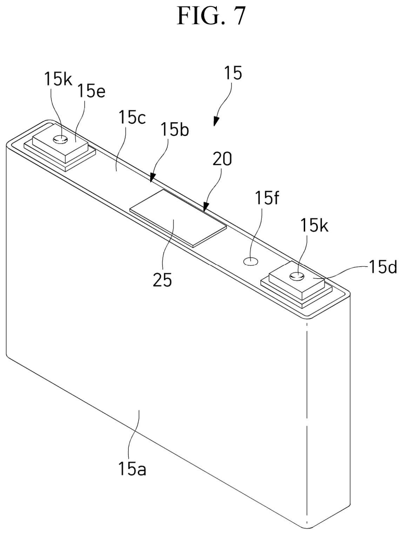

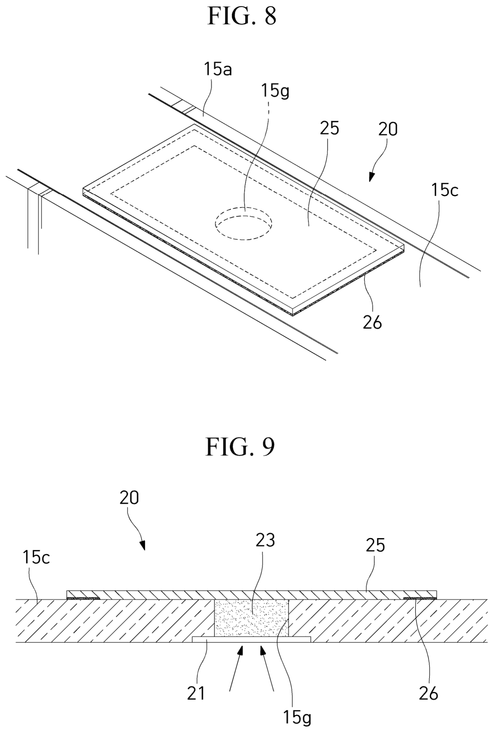

FIG. 7 is a perspective view illustrating a modified example of a secondary battery 15 according to an embodiment of the present disclosure, and FIG. 8 is an enlarged view illustrating the diffusion prevention unit shown in FIG. 7. Hereinafter, the same reference numbers as the above-described reference numbers refer to the same members with the same functions, and repetitive descriptions related thereto will be omitted as much as possible.

As shown in FIGS. 7 and 8, the flame retardant expansion sheet 25 may be fixed to an upper surface of the cap plate 15c while covering the vent hole 15g. An outer portion (e.g., a peripheral portion) of the flame retardant expansion sheet 25 may be maintained in a fixed state through a heat resistant adhesive 26. The heat resistant adhesive 26 serves as a sheet fixing part that adheres and fixes the outer portion of the flame retardant expansion sheet 25 to the cap plate 15c.

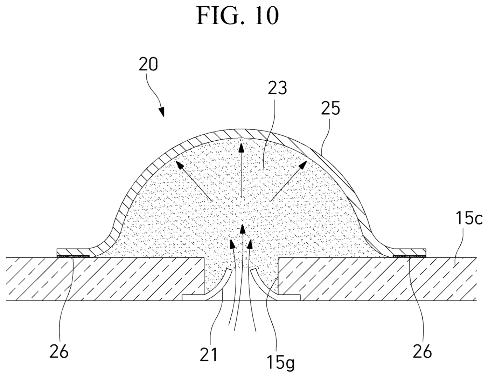

FIGS. 9 and 10 are cross-sectional views for describing the configuration and operation of the diffusion prevention unit 20 of FIG. 7.

Referring to FIGS. 9 and 10, the vent hole 15g between the safety vent 21 and the flame retardant expansion sheet 25 may be filled with the powder fire extinguishing agent 23. In addition, a bottom surface of the outer portion (e.g., peripheral portion) of the flame retardant expansion sheet 25 is fixed to the upper surface of the cap plate 15c using the heat resistant adhesive 26.

As shown in FIG. 10, the diffusion prevention unit 20 with the above configuration may block the propagation of gas and flames being ejected upward when the safety vent 21 ruptures. The flame retardant expansion sheet 25 is expanded upward by the pressure of the gas passing upward through the vent hole 15g. In this case, the flames filling a lower portion of the flame retardant expansion sheet 25 together with the gas may be extinguished by the extinguishing action of the powder fire extinguishing agent 23. Thermal runaway can be prevented by the diffusion prevention unit 20.

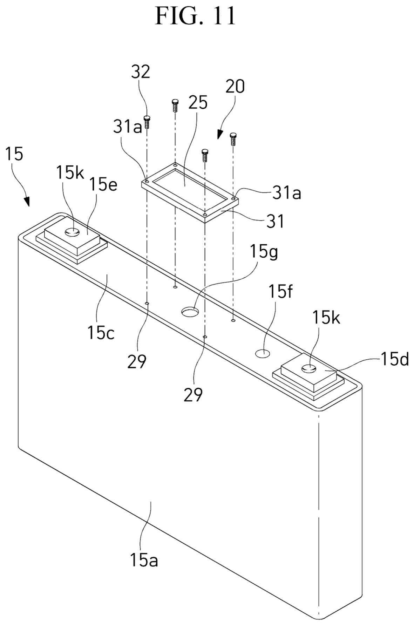

FIG. 11 is an exploded perspective view illustrating a secondary battery according to another embodiment of the present disclosure.

Referring to FIG. 11, the diffusion prevention unit 20 may further include a sheet support frame 31. The sheet support frame 31 has a quadrangular (e.g., square) frame shape and may support and maintain the flame retardant expansion sheet 25 in an unfolded state. The flame retardant expansion sheet 25 may cover the vent hole 15g while being supported by the sheet support frame 31.

In addition, a through-hole 31a may be provided at a corner of the sheet support frame 31, and a female threaded hole 29 may be formed in the cap plate 15c. The through-hole 31a may correspond one-to-one with the female threaded hole 29. While the sheet support frame 31 is placed on the cap plate 15c, a compression bolt 32 may be inserted into the through-hole 31a and then fastened to the female threaded hole 29 so that the fixing of the sheet support frame 31 to the cap plate 15c may be achieved. In this case, the flame retardant expansion sheet 25 is spaced apart from the cap plate 15c (e.g., the sheet support frame 31 may be between the flame retardant expansion sheet 25 and the cap plate 15c).

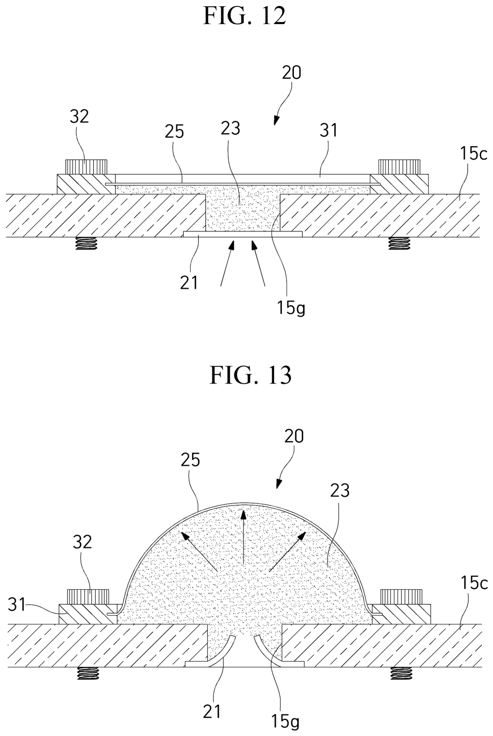

FIGS. 12 and 13 are diagrams for describing the configuration and operation method of the diffusion prevention unit 20 of FIG. 11.

Referring to FIG. 12, a space between the flame retardant expansion sheet 25 and the cap plate 15c and an internal space of the vent hole 15g may be filled with a powder fire extinguishing agent 23. Since the powder fire extinguishing agent 23 is also accommodated between the flame retardant expansion sheet 25 and the cap plate 15c, a volume of the available powder fire extinguishing agent increases, enabling more efficient fire extinguishing.

FIG. 13 shows that the safety vent 21 ruptures due to a pressure increase inside the battery can. As the safety vent 21 ruptures, the flame retardant expansion sheet 25 expands upward due to the pressure of the gas. The gas and flames and the powder fire extinguishing agent 23 are mixed inside the expanded flame retardant expansion sheet 25. In addition, the flames may be extinguished by the powder fire extinguishing agent 23.

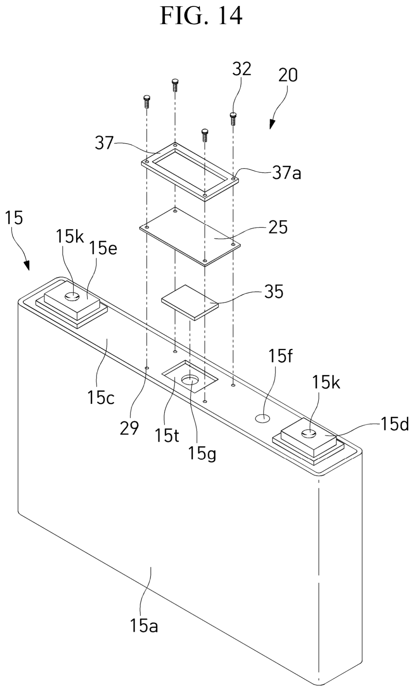

FIG. 14 is an exploded perspective view illustrating a secondary battery 15 according to still another embodiment of the present disclosure.

Referring to FIG. 14, the diffusion prevention unit 20 may include a fire extinguishing sheet 35, a flame retardant expansion sheet 25, and a pressing frame 37 as a sheet fixing part.

The fire extinguishing sheet 35 may be a sheet-shaped material capable of performing a fire extinguishing action and may cover the vent hole 15g. A fire extinguishing sheet installation groove 15t capable of accommodating the fire extinguishing sheet 35 may be formed in the cap plate 15c. The fire extinguishing sheet 35 may cover the vent hole 15g while accommodated in the fire extinguishing sheet installation groove 15t.

The flame retardant expansion sheet 25 may be in close contact (e.g., direct contact) with an upper surface of the cap plate 15c while covering the fire extinguishing sheet 35 and may be fixed to the cap plate 15c by the sheet fixing part. The sheet fixing part may include the pressing frame 37 and fastening parts. The pressing frame 37 has a quadrangular frame shape and may cover an outer portion of the flame retardant expansion sheet 25. Through-holes 37a may be formed at four corners of the pressing frame 37. The through-hole 37a may be a bolt hole through which a compression bolt 32, which is a fastening part, passes. The compression bolt 32 may be a fastening part that fixes the pressing frame 37 to the cap plate 15c.

The diffusion prevention unit 20 in FIG. 14 may be formed by sequentially stacking the flame retardant expansion sheet 25 and the pressing frame 37 on the fire extinguishing sheet 35 and fastening a compression bolt 32 passing through the through-hole 37a to the female threaded hole 29.

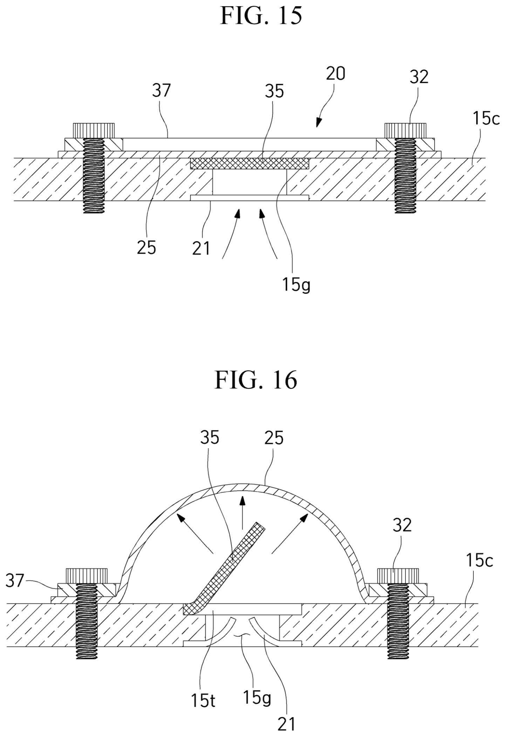

FIGS. 15 and 16 are diagrams for describing the configuration and operation method of the diffusion prevention unit 20 shown in FIG. 14.

Referring to FIGS. 15 and 16, when the internal pressure of the battery can 15a exceeds the allowable pressure, the safety vent 21 ruptures and the gas and flames inside the battery are ejected upward through the vent hole 15g. Accordingly, the fire extinguishing sheet 35 is lifted upward, and the flame retardant expansion sheet 25 also expands upward. The flames inside the flame retardant expansion sheet 25 may be extinguished by the extinguishing action of the fire extinguishing sheet 35. Consequently, the flames or gas released from the battery may be prevented from spreading to the surroundings by the diffusion prevention unit 20.

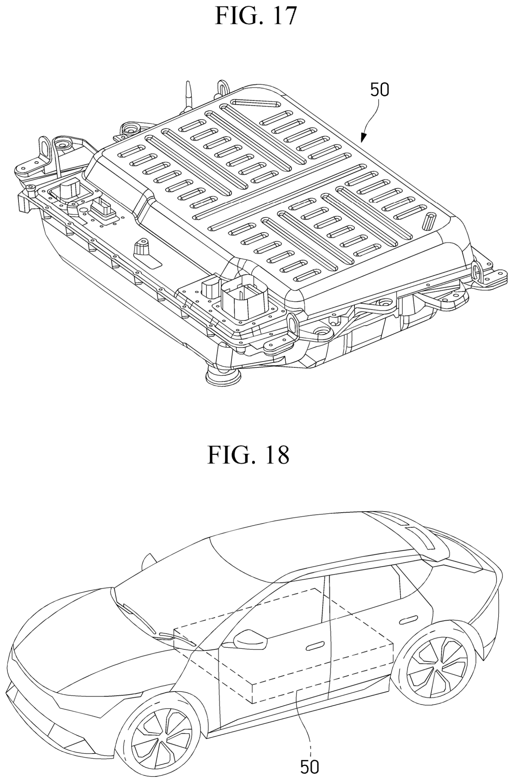

FIG. 17 is a perspective view illustrating a secondary battery pack 50 in which the secondary battery is built according to an embodiment of the present disclosure.

Referring to FIG .17, the secondary battery pack 50 may be manufactured by embedding a plurality of secondary battery modules in a pack housing designed to be mounted on an actual product. The pack housing may include a fastening portion and an electrical outlet portion required for mounting on a product. In Fig. 17, for convenience of illustration, bus bars for electrical connection of secondary batteries, cooling units, external terminals, and other related elements are omitted. The secondary battery pack may be mounted on a vehicle. The vehicle may be, e.g., an electric vehicle, a hybrid vehicle, or a plug-in hybrid vehicle. The vehicle may include a four-wheel drive or twowheel drive vehicle.

FIG. 18 is a diagram illustrating a vehicle to which the battery pack 50 of FIG. 17 is applied.

Referring to FIG. 18, the secondary battery pack 50 according to an embodiment of the present disclosure may be mounted on a lower portion of a vehicle body of a vehicle. The vehicle may operate by power received from the secondary battery pack 50 according to an embodiment of the present disclosure.

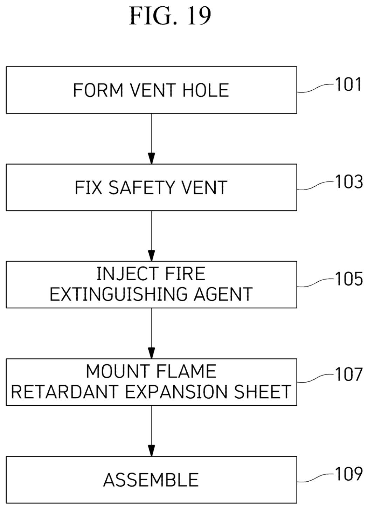

FIG. 19 is a flowchart illustrating a method of manufacturing a secondary battery according to an embodiment of the present disclosure.

Referring to FIG. 19, the method of manufacturing a secondary battery according to the present embodiment may include a vent hole forming operation 101, a safety vent fixing operation 103, a fire extinguishing agent injection operation 105, a flame retardant expansion sheet mounting operation 107, and an assembly operation 109.

The vent hole forming operation 101 is a process of forming the vent hole 15g in the cap plate 15c. As long as the diffusion prevention unit 20 can be installed, the vent hole 15g may be formed in the battery can 15a.

The safety vent fixing operation 103 is a process of fixing the safety vent 21 to the inside of the vent hole 15g. The fixing of the safety vent 21 to the vent hole may be performed by welding.

The fire extinguishing agent injection operation 105 is a process of injecting and filling an internal space of the vent hole 15g with the powder fire extinguishing agent 23. As described above, since the flame retardant expansion sheet 25 is fixed on the vent hole 15g, the powder fire extinguishing agent 23 may be interposed between the flame retardant expansion sheet and the safety vent.

The subsequent flame retardant expansion sheet mounting operation 107 is a process of fixing the flame retardant expansion sheet covering the vent hole to an upper surface of the cap plate using the sheet fixing part. When the vent hole 15g is formed in the battery can, the flame retardant expansion sheet 25 is mounted on an outer surface of the battery can 15a.

The assembly operation 109 is a process of assembling and welding the cap assembly 15b and battery can 15a after the installation of the diffusion prevention unit 20 is completed. The manufacturing process is completed through the assembly process.

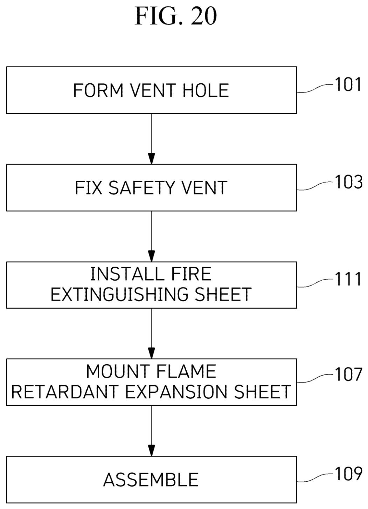

FIG. 20 is a flowchart illustrating another example of the method of manufacturing a secondary battery according to an embodiment of the present disclosure.

Referring to FIG. 20, the method of manufacturing a secondary battery may include a vent hole forming operation 101, a safety vent fixing operation 103, a fire extinguishing sheet installation operation 111, a flame retardant expansion sheet mounting operation 107, and an assembly operation 109. The fire extinguishing sheet installation operation 111 is a process of installing the fire extinguishing sheet 35 between the flame retardant expansion sheet 25 and the safety vent 21. The fire extinguishing sheet 35 may perform a flame extinguishing action while interposed between the safety vent 21 and the flame retardant expansion sheet 25.

By way of summation and review, when the vent portion is opened battery can upon reaching a predetermined threshold, excess pressure inside the battery may be alleviated. However, the flames and gas released from the vent portion may spread to the surrounding areas, causing thermal runaway. Measures for quickly extinguishing flames and preventing heat or flames from spreading to surrounding secondary batteries are required even when high-temperature gas and flames are released from the vent portion of the secondary battery.

Therefore, the present disclosure is directed to a secondary battery capable of preventing thermal runaway and improving the stability and reliability of a secondary battery module or pack by blocking the flames and gas released through a vent portion from spreading to the surroundings and immediately extinguishing the flames, and a method of manufacturing the same.

Aspects and features of the present disclosure are not limited to those described above, and other aspects and features not specifically mentioned herein will be clearly understood by those skilled in the art from the description of the present disclosure above.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery, comprising:
a battery can that accommodates an electrode assembly;
a cap assembly connected to the battery can;
a vent portion in the cap assembly, the vent portion being configured to open when an internal pressure of the battery can reaches a predetermined threshold; and
a diffusion prevention unit on the vent portion, the diffusion prevention unit being expandable in response to pressure of a gas when the gas and flames are released through the vent portion, and the diffusion prevention unit being configured to block the gas and flames from spreading to an outside.

2. The secondary battery as claimed in claim 1, wherein the diffusion prevention unit includes:
a flame retardant expansion sheet with elasticity and flame retardancy; and
a sheet fixer fixing the flame retardant expansion sheet to the cap assembly.

3. The secondary battery as claimed in claim 1 or claim 2, wherein the cap assembly includes:
a cap plate with electrode terminals; and
a vent hole through the cap plate, a safety vent covering the vent hole and being configured to rupture when the internal pressure reaches the predetermined threshold; and, optionally, wherein the sheet fixer includes a pressing frame covering a peripheral portion of the flame retardant expansion sheet, and a fastening part fixing the pressing frame to the cap plate.

4. The secondary battery as claimed in claim 3, when dependent on claim 2, wherein:
the flame retardant expansion sheet is fixed to the cap plate by the sheet fixer; and
a fire extinguishing material fills a space between the safety vent and the flame retardant expansion sheet; and, optionally, wherein the fire extinguishing material includes a powder fire extinguishing agent.

5. The secondary battery as claimed in claim 3 or claim 4, when dependent on claim 2, wherein:
the flame retardant expansion sheet is in contact with an upper surface of the cap plate; and
the sheet fixer includes fastening parts fixing a peripheral portion of the flame retardant expansion sheet to the cap plate.

6. The secondary battery as claimed in claim 3 or claim 4, when dependent on claim 2, wherein:
the flame retardant expansion sheet is in contact with an upper surface of the cap plate; and
the sheet fixer includes a heat resistant adhesive fixing a peripheral portion of the flame retardant expansion sheet to the cap plate.

7. The secondary battery as claimed in any of claims 3 to 6, when dependent on claim 2, further comprising a sheet support frame on the cap plate, the sheet support frame being configured to maintain the flame retardant expansion sheet in an unfolded state, and the sheet fixer including fastening parts fixing the sheet support frame to the cap plate.

8. The secondary battery as claimed in any of claims 3 to 7, when dependent on claim 2, further comprising a fire extinguishing sheet covering the vent hole, the fire extinguishing sheet being between the cap plate and the flame retardant expansion sheet and being configured to perform a flame extinguishing action; and, optionally, wherein the secondary battery further includes a fire extinguishing sheet installation groove in the cap plate, the fire extinguishing sheet installation groove accommodating the fire extinguishing sheet.

9. A method of manufacturing a secondary battery, the method comprising:
forming a battery can that accommodates an electrode assembly;
forming a vent portion in a cap assembly, the vent portion including a vent hole configured to open when an internal pressure of the battery can reaches a predetermined threshold;
forming a diffusion prevention unit on the vent portion, the diffusion prevention unit including a flame retardant expansion sheet covering the vent hole and being expandable in response to pressure of a gas; and
assembling the battery can and the cap assembly.

10. The method as claimed in claim 9, further comprising:
fixing a safety vent in the vent hole; and
injecting an extinguishing material between the flame retardant expansion sheet and the safety vent.

11. The method as claimed in claim 9 or claim 10, wherein:
the cap assembly is formed to include a cap plate, such that the vent hole is formed in the cap plate; and
the flame retardant expansion sheet is formed to have flame retardancy and elasticity and is fixed to the cap plate, such that the flame retardant expansion sheet is in contact with the cap plate by a sheet fixing part.

12. The method as claimed in claim 11, wherein
(A) the sheet fixing part includes a plurality of fastening parts that fix an outer portion of the flame retardant expansion sheet to the cap plate; or
(B) the sheet fixing part further includes a pressing frame that covers an outer portion of the flame retardant expansion sheet and fixes to the cap plate by the fastening part.

13. The method as claimed in claim 11, wherein the sheet fixing part includes a heat resistant adhesive that adheres and fixes an outer portion of the flame retardant expansion sheet to the cap plate.

14. The method as claimed in claim 9, further comprising:
fixing a safety vent in the vent hole; and
mounting a fire extinguishing sheet between the flame retardant expansion sheet and the safety vent, such that the fire extinguishing sheet performs a fire extinguishing function on flames.

15. The method as claimed in claim 14, wherein:
the cap assembly is formed to include a cap plate, such that the vent hole is formed in the cap plate; and
the flame retardant expansion sheet is formed to have flame retardancy and elasticity and is fixed to the cap plate, such that the flame retardant expansion sheet is in contact with the cap plate by a sheet fixing part.
